# EUROPÄISCHE PATENTANMELDUNG

(11) **EP 2 529 986 A2**
(43) Veröffentlichungstag der Anmeldung: **05.12.2012**
(21) Anmeldenummer: 12170539.6
(22) Anmeldetag: 01.06.2012
(51) Int. Cl.: B60T 1/12

(54) **Vorrichtung zur Schuberzeugung**

(30) Priorität: 01.06.2011 DE 102011103221
(71) Anmelder: Bayern-Chemie Gesellschaft für flugchemische Antriebe mbH, 84544 Aschau a. Inn (DE)
(72) Erfinder: Meier, Michael, 60435 Frankfurt am Main (DE); Weigand, Alexander, 84559 Kraiburg (DE); Hacker, Andreas, 83536 Gars (DE)
(74) Vertreter: von Puttkamer · Berngruber

(57) **Zusammenfassung**

Eine Vorrichtung zur Schuberzeugung, insbesondere zur Erhöhung der Radlast eines Kraftfahrzeuges oder Schienenfahrzeuges, weist wenigstens eine Brennkammer (3, 3') und wenigstens eine Gasaustrittsdüse (7) sowie wenigstens zwei Treibsätze (4, 4') und wenigstens einen Anzünder (8, 8') für jeden Treibsatz (4, 4') auf, wobei der wenigstens eine Anzünder (8, 8') jedes Treibsatzes (4, 4') unabhängig von dem wenigstens einen Anzünder (8', 8) des wenigstens einen weiteren Treibsatzes (4', 4) initiierbar ist.

## Beschreibung

Die Erfindung bezieht sich auf eine Vorrichtung zur Schuberzeugung, insbesondere zur Erhöhung der Radlast eines Kraft- oder Schienenfahrzeuges.

Zur Verkürzung des Bremsweges eines Kraft- oder Schienenfahrzeuges ist es bekannt, die Radlast durch eine Schuberzeugungsvorrichtung zu erhöhen, d. h. einen Booster, also eine Brennkammer mit einem eine große Gasmenge erzeugenden Treibsatz, die eine nach oben gerichtete Gasaustrittsdüse aufweist (vgl. z. B. DE 21 32 657).

Eine solche Schuberzeugungsvorrichtung ist nach ihrer Initiierung bis zum Brennschluss nicht mehr abschaltbar, sodass ausgeprägte Abgasflammen mit Entwicklung von Heißgasen, Nachverbrennung und toxischen Verbrennungsprodukten erzeugt werden.

Vor diesem Hintergrund liegt der Erfindung die Aufgabe zugrunde, eine Schuberzeugungsvorrichtung anzugeben, die die beschriebenen Nachteile vermeidet.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Die erfindungsgemäße Schuberzeugungsvorrichtung weist wenigstens eine Brennkammer und wenigstens eine Gasaustrittsdüse sowie wenigstens zwei Treibsätze und wenigstens einen Anzünder für jeden Treibsatz auf, wobei der wenigstens eine Anzünder jedes Treibsatzes unabhängig von dem wenigstens einen Anzünder des wenigstens einen weiteren Treibsatzes initiierbar ist.

Vorzugsweise wird für die Treibsätze ein in Tablettenform gepresster Treibstoff, insbesondere auf Guanidinnitrat-Basis (GuNi) eingesetzt.

Treibstoffe auf Guanidinnitrat-Basis werden u. a. als Schüttgut in Automobil-Airbags eingesetzt. Sie weisen eine hohe Langzeitstabilität, eine hohe Temperaturstabilität, relativ kalte Verbrennungsgase und eine relative Ungiftigkeit der Verbrennungsprodukte auf.

Die erfindungsgemäße Schuberzeugungsvorrichtung kann aus mehreren Brennkammern bestehen, die jeweils mit einem (einzigen) mit wenigstens einem Anzünder initiierbaren Treibsatz und einer Gasaustrittsdüse bestehen, wobei jeder Brennkammer eine eigene Düse zugeordnet ist, durch die das erzeugte Gas in eine bestimmte Richtung gelenkt werden kann.

Durch die Bündelung mehrerer solcher Brennkammern mit einer einzigen durch den jeweiligen Anzünder anzündbaren Treibsatz ist eine flexible Anordnung und ein modularer Aufbau der erfindungsgemäßen Vorrichtung zu einer Batterie möglich. Mit Hilfe der hierdurch möglichen sequentiellen Anzündung der Treibsätze kann die Brenndauer der von der Brenndauer eines einzigen Treibsatzes bis auf die Gesamtbrenndauer aller Treibsätze der erfindungsgemäßen Vorrichtung erhöht werden.

Der wenigstens eine Anzünder jedes Treibsatzes kann ein mechanischer, elektrischer oder optischer Anzünder sein. Zur Erhöhung der Anzünd-Zuverlässigkeit werden vorzugsweise Anzünder eingesetzt, die zwei oder mehr parallel wirkende Initiierungsmechanismen aufweisen. So verfügt z. B. der elektrisch initiierbare Anzünder vorzugsweise über wenigstens zwei Brückendrähte, mit denen wenigstens eine Initiierungsladung aktvierbar ist. Über die Initiierungsladung (en) ist/sind eine/mehrere Verstärkungsladung (en) aktivierbar. Die Verstärkungsladung (en) besteht (bestehen) vorzugsweise aus einer Anzündmischung, z. B. aus BKNO3, also einem Gemisch aus Bor und Kaliumnitrat.

Die Brenndauer jedes Treibsatzes beträgt vorzugsweise 50 bis 500 Millisekunden.

In einer bevorzugten Ausführungsform ist zwischen der Gasaustrittsdüse und der Brennkammer eine Rückhaltevorrichtung angeordnet, die grobe Verbrennungspartikel und unverbrannten Treibstoff, d. h. Brennstoff-Festanteile zurückhält, jedoch die verbrannten Heißgase zur Düse hin durchlässt.

Bei der Ausführungsform der Schuberzeugungsvorrichtung, bei der wenigstens zwei Treibsätze in jeweils einer Brennkammer einer gemeinsamen Gasaustrittsdüse zugeordnet sind, ist die Rückhaltevorrichtung zwischen der Gasaustrittsdüse und der der Gasaustrittsdüse benachbarten Brennkammer vorgesehen.

Die Rückhaltevorrichtung muss den Heißgasen standhalten und besteht z. B. aus Stahlwolle und/oder einem Rückhaltegitter. Das Rückhaltegitter, das beispielsweise ebenfalls aus Stahl bestehen kann, kann dabei ein Stützgitter für die Stahlwolle bilden. Zusätzlich ist die Stahlwolle dazu geeignet, den Treibstoff als Schüttgut vibrationsarm in der Brennkammer zu fixieren.

Die Rückhaltevorrichtung kann aber auch durch andere Bauteile gebildet sein, die dazu geeignet sind, die unverbrannten Brennstoffanteile in der Brennkammer zurückzuhalten, beispielsweise ein poröser Festkörper oder ein Vlies, z. B. aus Glas oder Keramikfasern.

Die Aufgabe der Abschaltbarkeit wird erfindungsgemäß dadurch gelöst, dass die einzelnen Treibsätze der Schuberzeugungsvorrichtung unabhängig voneinander initiierbar sind. Durch die sequentielle Initiierung der einzelnen Treibsätze ist eine gewisse Abschaltbarkeit der Schuberzeugungsvorrichtung gegeben, da die einzelnen Treibsätze jeweils nur eine relativ kurze Brenndauer aufweisen. Durch die gezielte Initiierung einzelner Treibsätze kann der erzeugte Schub gezielt an- und ausgeschaltet werden.

Jedoch können mit der erfindungsgemäßer Schuberzeugungsvorrichtung auch wenigstens zwei oder mehr Treibsätze gleichzeitig initiiert werden. Durch die Initiierung von zwei oder mehr Treibsätzen kann die erzeugte Schubkraft gezielt gesteuert werden. Die Initiierungssequenz der Schuberzeugungsvorrichtung kann auch beispielsweise derart erfolgen, dass einzelne Treibsätze und unterschiedliche Gruppen von gleichzeitig initiierbaren Treibsätzen in beliebiger Reihenfolge sequentiell nacheinander initiiert werden.

Nach einer weiteren bevorzugten Ausführungsform der Schuberzeugungsvorrichtung sind zwei, mehrere oder alle Treibsätze der Vorrichtung einer gemeinsamen Düse zugeordnet. Durch die Zuordnung von zwei, mehreren oder allen Treibsätzen zu einer gemeinsamen Düse kann das durch die Treibsätze erzeugte Gas durch eine gemeinsame Düse gezielt in eine bestimmte Richtung gelenkt werden.

Bei dieser Ausführungsform, bei der wenigstens zwei Treibsätze einer gemeinsamen Gasaustrittsdüse zugeordnet sind, sind die Treibsätze durch eine Pulstrennvorrichtung voneinander getrennt. Die durch die Pulstrennvorrichtung voneinander getrennten Treibsätze können einzeln oder in Gruppen aktiviert werden, ohne dass andere Treibsätze ungewollt mitaktiviert werden.

Die Pulstrennvorrichtung kann z. B. durch eine Membran gebildet werden, beispielsweise eine Umkehrberstmembran, d. h. eine Membran, die zu einem Treibsatz hin gewölbt ist, jedoch reißt, wenn sie nach dem Zünden dieses Treibsatzes umgestülpt wird und beim Umstülpen entsprechend hohe Kräfte auf sie einwirken. Statt dessen kann die Pulstrennvorrichtung beispielsweise auch durch eine Membran gebildet sein, die sich auf einer gasdurchlässigen Abstützeinrichtung, z. B. einem Gitter auf der Seite des nachher gezündeten Treibsatzes abstützt.

Die erfindungsgemäße Schuberzeugungseinrichtung ist insbesondere als Vorrichtung zur Erhöhung der Radlast eines Kraftfahrzeuges.

Dabei ist vorzugsweise an einer Achse eines zweispurigen Fahrzeugs, also z. B. eines PKW, im Bereich der Räder jeweils eine erfindungsgemäße Schuberzeugungsvorrichtung vorgesehen. Durch den Bereich der beiden Räder einer Achse jeweils vorgesehenen erfindungsgemäßen Schuberzeugungsvorrichtungen können einzelne Schubsequenzen zur Verfügung gestellt werden.

Die maximal erreichbare Bremsverzögerung von Kraft- und Schienenfahrzeugen hängt physikalisch betrachtet im Wesentlichen von zwei grundlegenden Bremskräften ab:

Zum einen von der axial wirkenden Brems- bzw. Schubkraft der Schuberzeugungsvorrichtungen des Fahrzeugs, die entgegen der Fahrtrichtung zum Bremsen des Fahrzeugs gerichtet ist, und zum anderen von der aufgrund der Reibung zwischen den Kontaktelementen Rad und Untergrund wirkenden Bremskraft.

Neben der Gewichtskraft des Fahrzeugs und deren Verteilung auf die Räder ist diese Bremskraft beim Einsatz der Schuberzeugungsvorrichtung zusätzlich abhängig, einerseits von der normal wirkenden Schubkraft der Schuberzeugungsvorrichtung, d. h. der Schubkraft, die senkrecht auf die Kontaktfläche zwischen Rad und Untergrund wirkt, und andererseits den Reibungskoeffizienten zwischen den Kontaktflächen Rad und Untergrund.

Hierbei kann die Aufteilung der axial und normal wirkenden Schubkraft über den Einstellwinkel der Schuberzeugungsvorrichtungen, also der Gasaustrittsöffnung der Düsen der Schuberzeugungsvorrichtungen gegenüber der Fahrzeugbezugsachse eingestellt werden.

Hierbei kann mit der erfindungsgemäßen Schuberzeugungsvorrichtung durch Anpassung des Schubvektors auf die Fahrzeugstruktur, d. h. Schubvektorkomponenten in Normal- und in Fahrzeuglängsrichtung entgegen der Fahrtrichtung die Bremsleistung weiter gesteigert werden.

Durch den modularen Aufbau der erfindungsgemäßen Schuberzeugungsvorrichtung und der daraus gewonnen Abschaltbarkeit des Systems ist eine hohe Flexibilität in der Bremskraft-Regelung bzw. -Adaption gegeben. Durch die Modularität der Schuberzeugungsvorrichtung kann diese nahezu beliebig an den zur Verfügung stehenden Bauraum im Fahrzeug angepasst werden. Auch ist durch die hohe Modularität und durch die Verwendung von Airbag-Komponenten, also beispielsweise des Treibstoffs und des Anzünders, eine kostengünstige Produktion der Schuberzeugungsvorrichtung möglich.

Weitere Vorteile, Merkmale und Einzelheiten der Erfindung ergeben sich aus der nachfolgenden Beschreibung, in der unter Bezugnahme auf die Zeichnung Ausführungsbeispiele im Einzelnen beschrieben sind.

Es zeigen jeweils im Längsschnitt:
Figur 1 von der Ausführungsform der Schuberzeugungsvorrichtung mit wenigstens zwei Brennkammern mit jeweils einem Treibsatz und einer Düse eine der wenigstens zwei Brennkammern;
Figur 2 eine andere Ausführungsform der Brennkammer nach Figur 1;
Figur 3 eine weitere Ausführungsform der Schuberzeugungsvorrichtung, bei der einer Düse zwei Treibsätze zugeordnet sind; und
Figur 4 eine der Figur 3 entsprechende Ausführungsform, bei der jedoch fünf Treibsätze einer gemeinsamen Düse zugeordnet sind.

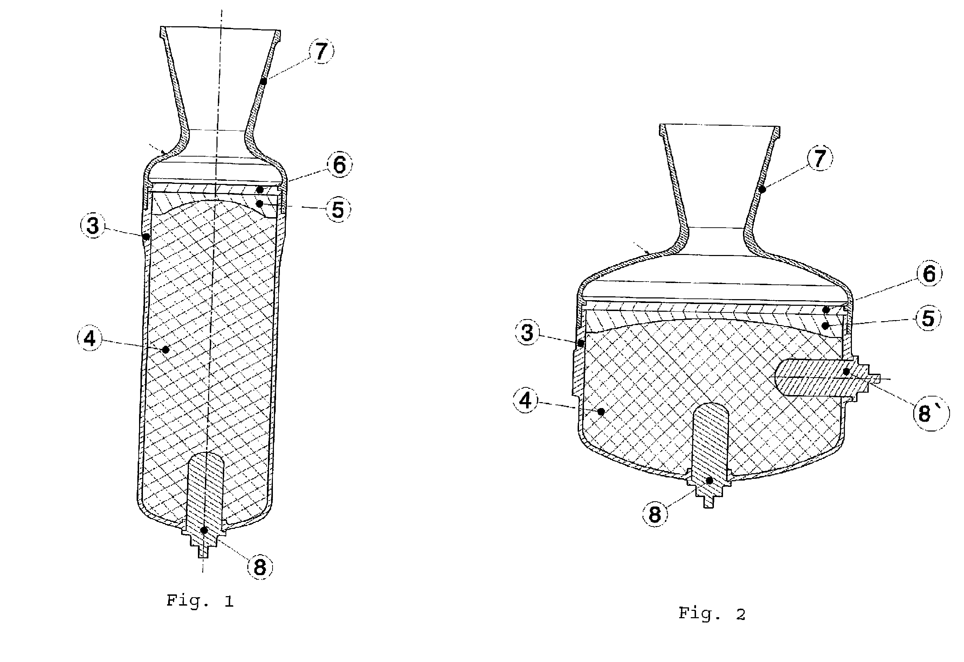

In den Figuren 1 und 2 ist eine Brennkammer 3 dargestellt, die einen Treibsatz 4 enthält. Um in der Brennkammer 3 den Treibsatz 4 möglichst vibrationsarm zu fixieren, ist er mit Hilfe eines Materials, vorzugsweise Stahlwolle 5, im eingebauten Zustand zusammengedrückt. Die Stahlwolle 5 befindet sich brennkammerseitig vor dem Düsenzulauf und wird über ein Rückhaltegitter 6 gehalten. Im Anschluss an den Düsenzulauf befindet sich die Gasaustritts- oder Schubdüse 78. Zur Aktivierung des Treibsatzes 4 ist in der Brennkammer 3 ein Anzünder 8 angeordnet.

Nach Zündung des Treibsatzes 4 in der Brennkammer 3 durch den Anzünder 8 expandieren die Verbrennungsgase zur Schuberzeugung über die Düse 7 aus der Brennkammer 3. Damit über die Düse 7 möglichst keine unverbrannten Treibstoff-Partikel aus der Brennkammer 3 nach außen treten, ist zwischen der Brennkammer 3 und der Düse 7 das Rückhaltegitter 6 mit Stahlwolle 5 angeordnet. Das Rückhaltegitter 6 ist beispielsweise durch ein Gitter aus Stahl gebildet. Falls erforderlich, kann die Stahlwolle 5 zusätzlich zu dem Rückhaltegitter 6 als Filter zum Rückhalten von kleineren Treibstoffpartikeln Verwendung finden.

Im Unterschied zu Figur 1, bei der die Düse 7 koaxial zur Brennkammer 3 angeordnet ist, ist in Figur 2 die Düse 7 quer zur Brennkammer 3 angeordnet. Weiterhin verfügt die Brennkammer 3 in Figur 2 beispielhaft über zwei Anzünder 8, 8', die sich an den beiden gegenüberliegenden Seiten der Brennkammer 3 befinden. Durch die mehrfache und voneinander räumlich getrennte Initiierung des Treibsatzes 4 ist eine schnelle Verbrennung des Treibstoffes und eine gezielte Erhöhung des erzeugten Schubes möglich. Zusätzlich wird durch die zwei Anzünder 8, 8' die Ausfallsicherheit erhöht.

Die erfindungsgemäße Schuberzeugungsvorrichtung weist wenigstens zwei der in Figur 1 und/oder Figur 2 dargestellten Brennkammern 3 mit einem Treibsatz 4 und einer Düse 7 auf, wobei die Anzünder der wenigstens zwei Treibsätze unabhängig voneinander initiierbar sind.

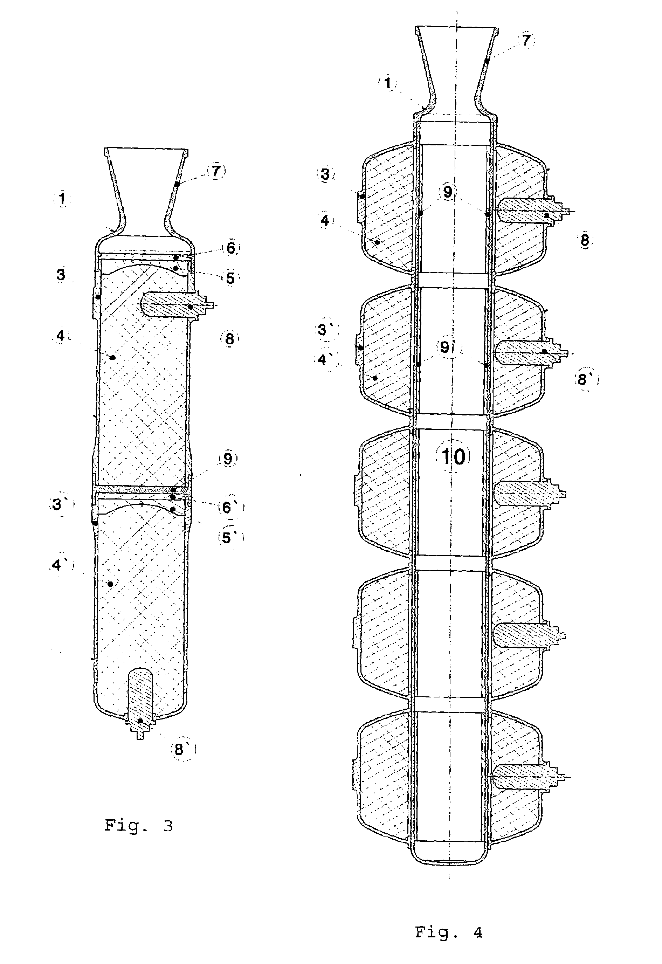

In Figur 3 ist eine erfindungsgemäße Ausführungsform der Schuberzeugungsvorrichtung mit zwei der Gasaustrittsdüse 7 zugeordneten Treibsätzen 4, 4' dargestellt.

Dabei können die Treibsätze 4, 4' sequentiell aktiviert werden. Zunächst wird der Treibsatz 4 aktiviert, der näher an der Düse 7 angeordnet ist. Erst wenn der Raum, der zuvor von dem ersten Treibsatz 4 belegt war, frei ist, kann der Treibsatz 4' aktiviert werden, der auf der düsenabgewandten Seite des ersten Treibsatzes 4 angeordnet ist. Zwischen den zwei Treibsätzen 4, 4' ist eine Pulstrennvorrichtung 9 angeordnet.

Die Pulstrennvorrichtung 9 sorgt dafür, dass der zweite Treibsatz 4' nicht aktiviert werden kann, während der erste Treibsatz 4 abbrennt. Die Pulstrennvorrichtung 9 schirmt den zweiten Treibsatz 4' somit von der Bedrückung und von der thermischen Beaufschlagung der heißen Verbrennungsprodukte des ersten aktivierten Treibsatzes 4 ab. Die Pulstrennvorrichtung 9 ist so ausgelegt, dass diese bei Aktivierung des zweiten Treibsatzes 4', die Brennkammer 3' in Richtung Düse 7 freigibt. Die Brennkammern 3, 3' sind mit den Treibsätzen 4, 4' gefüllt. Hierbei sind die Treibsätze 4, 4' gegebenenfalls mittels einer gasdurchlässigen Haltevorrichtung (z. B. Stahlwolle 5, 5' und Rückhaltegitter 6, 6') fixiert. Falls erforderlich, kann die Stahlwolle 5, 5' zusätzlich zu den Rückhaltegittern 6, 6' als Filter zum Rückhalten von kleineren Treibstoffpartikeln Verwendung finden.

Die beiden Treibsätze 4, 4' sind jeweils mit einem Anzünder 8, 8' versehen, über die die Treibsätze 4, 4' jeweils unabhängig voneinander aktiviert werden können. Der Anzünder 8 des Treibsatzes 4 kann hierbei düsenseitig (wie in Figur 3 dargestellt) oder auch auf Seite der Pulstrennvorrichtung 9 (nicht dargestellt) angeordnet sein. In ähnlicher Weise kann der Anzünder 8' des Treibsatzes 4' kopfendseitig (wie in Figur 3 dargestellt), oder auf Seite der Pulstrennvorrichtung 9 (nicht dargestellt) angeordnet sein.

In Figur 4 ist eine weitere Ausführungsform der Schuberzeugungsvorrichtung 1 mit insgesamt fünf Treibsätzen gezeigt, die einer gemeinsamen Düse 7 zugeordnet sind. Für die weiteren Ausführungen sind in Figur 4 beispielhaft nur zwei der insgesamt fünf Treibsätze mit 4, 4' bezeichnet.

In der dargestellten Ausführungsform der Schuberzeugungsvorrichtung können die einzelnen Treibsätze 4, 4' unabhängig voneinander aktiviert werden, wobei auch mehrere Treibsätze 4, 4' gemeinsam in Gruppen aktiviert werden können. Die Reihenfolge der zu aktivierenden Treibsätze 4, 4' ist hierbei frei wählbar, da die einzelnen Treibsätze 4, 4' über einen gemeinsamen Strömungskanal verfügen und über ihre jeweiligen Pulstrennvorrichtungen 9, 9' voneinander getrennt sind.

Die einzelnen Treibsätze 4, 4' sind koaxial in der Form einer zylindrischen Hülse um einen gemeinsamen Strömungskanal 10 angeordnet. Die einzelnen Treibsätze 4, 4' weisen jeweils eine bestimmte Menge Treibstoff auf und werden jeweils über einen eigenen Anzünder 8, 8' unabhängig voneinander einzeln oder in Gruppen gezündet. Die Treibsätze 4, 4' sind jeweils über Pulstrennvorrichtungen 9, 9' voneinander getrennt. Die Pulstrennvorrichtungen 9, 9' sind derart ausgelegt, dass die Aktivierung eines Treibsatzes (des Treibsatzes 2) die anderen Treibsätze (hier der Treibsatz 2') nicht aktivieren kann. Die Pulstrennvorrichtungen 9, 9' sind beispielsweise durch Membranen gebildet, die auf der Strömungskanalseite 10 hohen Drücken und Temperaturen aushalten, jedoch bei einem relativ geringem Druck an der dem Treibsatz 4, 4' zugewandten Seite den Verbrennungsgasen des Treibsatzes 4, 4' den Weg in Richtung Strömungskanal 10 und Düse 7 freigeben.

Die erfindungsgemäße Schuberzeugungsvorrichtung ist nicht auf die in den Figuren dargestellten und vorstehend beschriebenen Ausführungsformen beschränkt.

Wesentlich ist lediglich, dass sie wenigstens zwei Treibsätze aufweist und die wenigstens zwei Treibsätze einer Düse oder jeweils einer Düse zugeordnet sind, wobei jeder Treibsatz unabhängig von dem wenigstens einem weiteren Treibsatz mit wenigstens einem Anzünder anzündbar ist. Damit kann der eine Treibsatz zusammen mit dem wenigstens einen weiteren Treibsatz z. B. gleichzeitig gezündet werden, um bei einem Bremsvorgang eine möglichst hohe Radlast zu erreichen, oder z. B. nur ein Treibsatz, wenn bei einem Bremsvorgang die dadurch erzielte Radlasterhöhung ausreicht.

Dabei ist vorzugsweise im Bereich jedes Rades einer Achse des Fahrzeugs, also z. B. der Vorderachse jeweils eine erfindungsgemäße Schuberzeugungsvorrichtung vorgesehen. Jeder der beiden Schuberzeugungsvorrichtungen im Bereich der beiden Räder kann wenigstens zwei jeweils einer Düse zuordnete Treibsätze aufweisen und/oder wenigstens zwei Treibsätze, die einer gemeinsamen Düse zugeordnet sind. Die jeweils einer Düse zugeordneten Treibsätze und/oder die wenigstens zwei einer gemeinsamen Düse zugeordneten Treibsätze sind in Anordnung und Anzahl beliebig miteinander kombinierbar, wobei die Anzahl nur durch den zur Verfügung stehenden Bauraum im Bereich der Räder begrenzt wird. Die Anzahl der gezündeten Treibsätze pro Bremsvorgang hängt davon ab, ob die dadurch erzielte Radlasterhöhung für den jeweiligen Bremsvorgang ausreicht.

Die erfindungsgemäße Vorrichtung ist nicht auf Radfahrzeuge beschränkt, sie kann beispielsweise auch bei einer Magnetschwebebahn eingesetzt werden.

### Bezugszeichenliste

- 1: Schuberzeugungsvorrichtung
- 3,3': Brennkammer
- 4,4': Treibsatz
- 5: Stahlwolle
- 6: Rückhaltegitter
- 7: Düse
- 8,8': Anzünder
- 9: Pulstrennvorrichtung
- 10: Strömungskanal

## Patentansprüche

1. Vorrichtung zur Schuberzeugung, aufweisend wenigstens eine Brennkammer (3, 3') und wenigstens eine Gasaustrittsdüse (7) sowie wenigstens zwei Treibsätze (4, 4') und wenigstens einen Anzünder (8, 8') für jeden Treibsatz (4, 4'), wobei der wenigstens eine Anzünder (8, 8') jedes Treibsatzes (4, 4') unabhängig von dem wenigstens einen Anzünder (8', 8) des wenigstens einen weiteren Treibsatzes (4', 4) initiierbar ist.

2. Vorrichtung nach Anspruch 1, **dadurch gekennzeichnet, dass** die Treibsätze (4, 4') aus zu Tabletten gepresstem Treibstoff bestehen.

3. Vorrichtung nach Anspruch 2, **dadurch gekennzeichnet, dass** der Treibstoff auf Guanidinnitrat-Basis ist.

4. Vorrichtung nach einem der vorherigen Ansprüche, **dadurch gekennzeichnet, dass** die Brenndauer jedes Treibsatzes (4, 4') 50 Millisekunden bis 500 Millisekunden beträgt.

5. Vorrichtung nach einem der vorherigen Ansprüche, **dadurch gekennzeichnet, dass** zwischen der Gasaustrittsdüse (7) und der der Gasaustrittsdüse (7) benachbarten Brennkammer (3, 3') eine Rückhaltevorrichtung zum Zurückhalten von Verbrennungspartikeln der Treibsätze (4, 4') vorgesehen ist.

6. Vorrichtung nach Anspruch 5, **dadurch gekennzeichnet, dass** die Rückhaltevorrichtung durch Stahlwolle (5) und/oder ein Rückhaltegitter (6) gebildet wird.

7. Vorrichtung nach Anspruch 1, **dadurch gekennzeichnet, dass** die Treibsätze (4, 4') sequentiell und unabhängig voneinander aktivierbar sind.

8. Vorrichtung nach einem der vorstehenden Ansprüche, **dadurch gekennzeichnet, dass** wenigstens zwei Treibsätze (4, 4') einer gemeinsamen Gasaustrittsdüse (7) zugeordnet sind.

9. Vorrichtung nach Anspruch 8, **dadurch gekennzeichnet, dass** die wenigstens zwei, einer gemeinsamen Gasaustrittsdüse (7) zugeordneten Treibsätze (4, 4) durch eine Pulstrennvorrichtung (5) voneinander getrennt sind.

10. Vorrichtung nach einem der vorherigen Ansprüche, **dadurch gekennzeichnet, dass** sie eine Vorrichtung zur Erhöhung der Radlast eines Kraftfahrzeuges oder Schienenfahrzeuges ist.
